# EUROPEAN PATENT APPLICATION

(11) **EP 4 243 244 A1**
(43) Date of publication of application: **13.09.2023**
(21) Application number: 23160770.6
(22) Date of filing: 08.03.2023
(51) Int. Cl.: H02J 50/80, H02J 50/40, H02J 7/00, H02J 50/00

(54) **CONTINUOUS PACKET TRANSMISSION FOR WIRELESS CHARGING**

(30) Priority: 11.03.2022 US 202263318804 P; 06.03.2023 US 202318117476
(71) Applicant: MediaTek Inc., Hsin-Chu 300 (TW)
(72) Inventor: YAN, Hong-Sheng, 30078 Hsinchu City (TW); LIANG, Yun-Hao, 30078 Hsinchu City (TW); LIN, Kuo-Yu, 30078 Hsinchu City (TW)
(74) Representative: Hoefer & Partner Patentanwälte mbB

(57) **Abstract**

The present invention provides a control method of an electronic device (100), wherein the control method includes the steps of: enabling a wireless charging mode; generating a packet, wherein the packet comprises content that is not recognized by other electronic devices (180, 190) to issue an acknowledgement; and wirelessly transmitting the packet, and continuously retransmitting the packet.

## Description

### Field of the Invention

The present invention relates to a wireless charging method.

### Background of the Invention

In the process of using radio frequency (RF) signals for wireless charging, in order to achieve better charging efficiency, an electronic device needs to continuously transmit packets and the transmission interval should be shortened as much as possible. However, because a packet generation speed is limited by a working frequency of a microprocessor within the electronic device, and the microprocessor usually has lower performance, the wireless charging efficiency cannot be further improved due to the limited packet transmission rate.

### Summary of the Invention

It is therefore an objective of the present invention to provide a wireless charging method, which uses a Wi-Fi retransmission mechanism to continuously generate packets for a remote device to use the packets to charge its internal battery, to solve the above-mentioned problems.

This is achieved by a control method of an electronic device according to claim 1, a circuitry within an electronic device according to claim 8, and an electronic device according to claim 10. The dependent claims pertain to corresponding further developments and improvements.

As will be seen more clearly from the detailed description following below, a control method of an electronic device comprises the steps of enabling a wireless charging mode; generating a packet, wherein the packet comprises content that is not recognized by other electronic devices to issue an acknowledgement; and wirelessly transmitting the packet, and continuously retransmitting the packet.

As will be seen more clearly from the detailed description following below, a circuitry within an electronic device is configured to perform the steps of: enabling a wireless charging mode; generating a packet, wherein the packet comprises content that is not recognized by other electronic devices to issue an acknowledgement; and wirelessly transmitting the packet, and continuously retransmitting the packet.

As will be seen more clearly from the detailed description following below, an electronic device comprising a processor and a wireless communication module is disclosed. The processor is configured to enable a wireless charging mode and generate a packet, wherein the packet comprises content that is not recognized by other electronic devices to issue an acknowledgement. The wireless communication module is configured to wirelessly transmit the packet, and continuously retransmit the packet.

### Brief Description of the Drawings

FIG. 1 is a diagram illustrating a communication system according to one embodiment of the present invention.
FIG. 2 is a diagram illustrating a packet transmission method for wireless charging according to a first embodiment of the present invention.
FIG. 3 is a diagram illustrating a packet transmission method for wireless charging according to a second embodiment of the present invention.
FIG. 4 is a diagram illustrating a packet transmission method for wireless charging according to a third embodiment of the present invention.
FIG. 5 is a diagram illustrating a packet transmission method for wireless charging according to a fourth embodiment of the present invention.

### Detailed Description

Certain terms are used throughout the following description and claims to refer to particular system components. As one skilled in the art will appreciate, manufacturers may refer to a component by different names. This document does not intend to distinguish between components that differ in name but not function. In the following discussion and in the claims, the terms "including" and "comprising" are used in an open-ended fashion, and thus should be interpreted to mean "including, but not limited to ...". The terms "couple" and "couples" are intended to mean either an indirect or a direct electrical connection. Thus, if a first device couples to a second device, that connection may be through a direct electrical connection, or through an indirect electrical connection via other devices and connections.

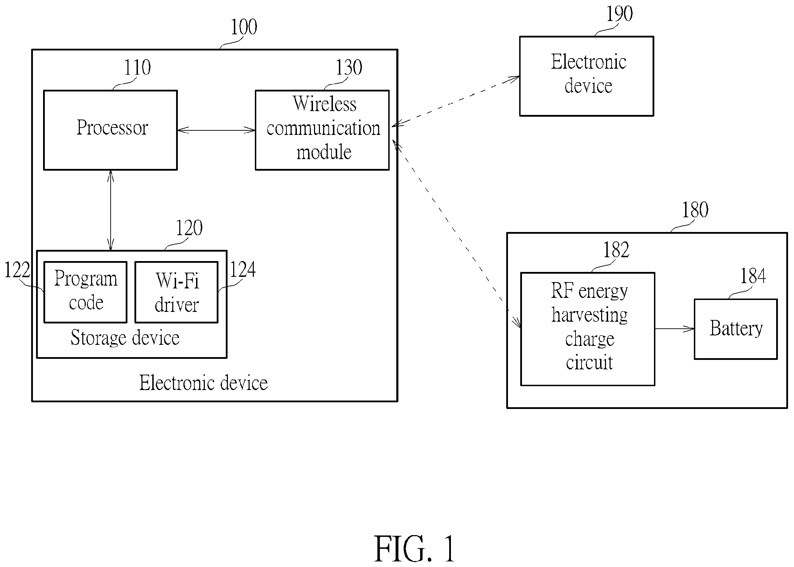

FIG. 1 is a diagram illustrating a communication system according to one embodiment of the present invention. As shown in FIG. 1, the communication system comprises a plurality of electronic devices 100, 180 and 190, wherein the electronic device 100 is capable of communicating with the electronic devices 180 and 190. The electronic device 100 comprises a processor 110, a storage device 120 comprising a program code 122 and a Wi-Fi driver 124, and a wireless communication module 130, wherein the wireless communication module 130 comprises at least a Wi-Fi chip. The electronic device 180 comprises an RF energy harvesting charge circuit 182 and a battery 184, wherein the RF energy harvesting charge circuit 182 can transfer the captured W-Fi signal to energy to charge the battery 184.

In one embodiment, the electronic device 100 may be a television, and the electronic device 180 may be a remote controller used for controlling the electronic device 100, but it's not a limitation of the present invention. In another embodiment, the electronic device 100 can be any suitable device capable of generating Wi-Fi signals, and the electronic device 180 can be any device having wireless charging function.

In one embodiment, the electronic device 180 may communicate with the electronic device 100 by using Bluetooth, and the electronic device 180 may not have Wi-Fi receiver for processing the Wi-Fi signals. That is, for the electronic device 180, the Wi-Fi signal is only used for charging the battery 184.

In the operation of the electronic device 100, the processor 110 reads the program code 122 from the storage device 120, and executes the program code 122 to control the operation of the electronic device 100. In addition, the processor 110 executes the Wi-Fi driver 124 to have the wireless communication function. In this embodiment, the processor 110 can enable or disable a wireless charging mode, wherein when the processor 110 enables the wireless charging mode, a packet retransmission mechanism is triggered so that the Wi-Fi packets can be automatically delivered in a continuous and high-density manner, so that the electronic device 180 has high wireless charging efficiency.

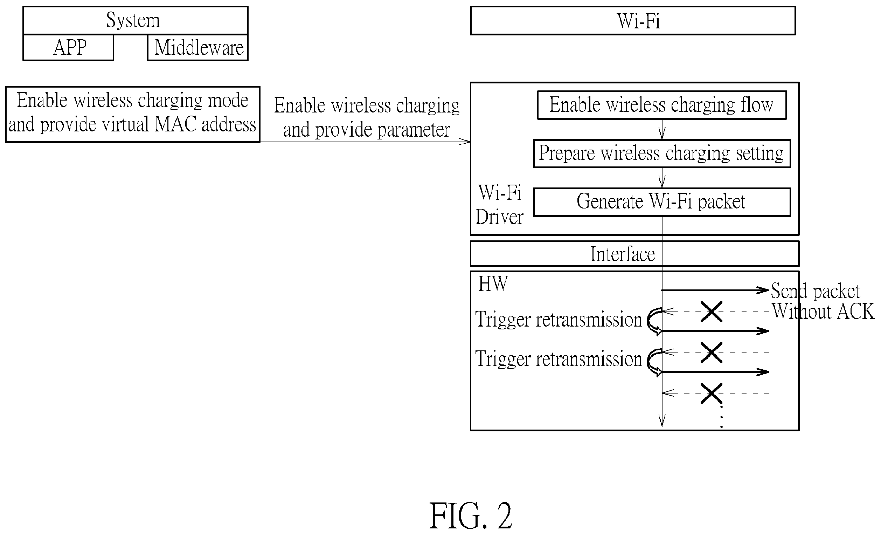

FIG. 2 is a diagram illustrating a packet transmission method for wireless charging according to a first embodiment of the present invention. Referring to FIG. 1 and FIG. 2 together, initially an application and a middle of a system side enables the wireless charging mode and provides a virtual media access control (MAC) address, wherein the virtual MAC address is user configurable parameter, and is different from a physical MAC address (i.e., a burned-in address on the hardware), that is the virtual MAC address does not correspond to any electronic device. Then, the processor 110 executes the Wi-Fi driver 124 to enable a wireless charging flow, prepare wireless charging setting and generate a Wi-Fi packet. In this embodiment, a header of the Wi-Fi packet comprises the virtual MAC address (i.e., the header of the Wi-Fi packet does not have any physical MAC address), and the Wi-Fi packet has a payload with large size or a maximum size. Then, the processor 110 transmits the Wi-Fi packet to the wireless communication module 130 via an interface, wherein the interface may be Universal Serial Bus (USB) interface, Secure Digital Input/Output (SDIO) interface, Peripheral Component Interconnect Express (PCIe) interface, or any other suitable interface. After obtaining the Wi-Fi packet, the wireless communication module 130 starts to transmit the Wi-Fi packet, and the contents of the Wi-Fi packet are temporarily stored in a buffer within the wireless communication module 130 for the following packet retransmission. Then, because the Wi-Fi packet comprises the virtual MAC address instead of the physical MAC address, no electronic device will send an acknowledgement (ACK) back to the electronic device 100. If no ACK is received for a period of time, the wireless communication module 130 triggers a retransmission mechanism to retransmit the Wi-Fi packet.

In light of above, because the wireless communication module 130 always sends the Wi-Fi packet with virtual MAC address, the wireless communication module 130 will not receive any ACK in response to the Wi-Fi packet, so the Wi-Fi packet is continuously retransmitted, and the RF energy harvesting charge circuit 182 can generate higher energy to charge the battery 184 efficiently due to the high-density Wi-Fi packets in the air.

In one embodiment, without a limitation of the present invention, the retransmission of the Wi-Fi packet is performed by hardware circuits within the wireless communication module 130. Because the retransmission mechanism is triggered by hardware circuits instead of software or firmware, the wireless communication module 130 can have faster packet retransmission speed.

It is noted that the retransmission mechanism is defined in Wi-Fi protocol, so the retransmission of the Wi-Fi packets follows the Wi-Fi specification and does not affect other devices.

In one embodiment, if the battery 184 has been charged with enough energy, the electronic device 180 can send battery information to the electronic device 100 to notify that the battery 184 is full. After receiving this battery information, the processor 110 can disable the wireless charging mode and the wireless communication module 130 does not transmit the Wi-Fi packets with virtual MAC address, or the wireless communication module 130 can decrease the transmission density of the Wi-Fi packets (e.g., increase the packet transmission interval or shorten the packet transmission time/size).

In addition, sometimes a time of packet transmission or number of packet retransmissions may be limited, so the processor 110 may periodically detect whether the packet retransmission stops or no Wi-Fi packet is transmitted. If the processor 110 detects that the packet retransmission stops, the processor 110 will enable the wireless charging mode again and generate another virtual MAC address or generate another Wi-Fi packet to the wireless communication module 130, to transmit the Wi-Fi packet.

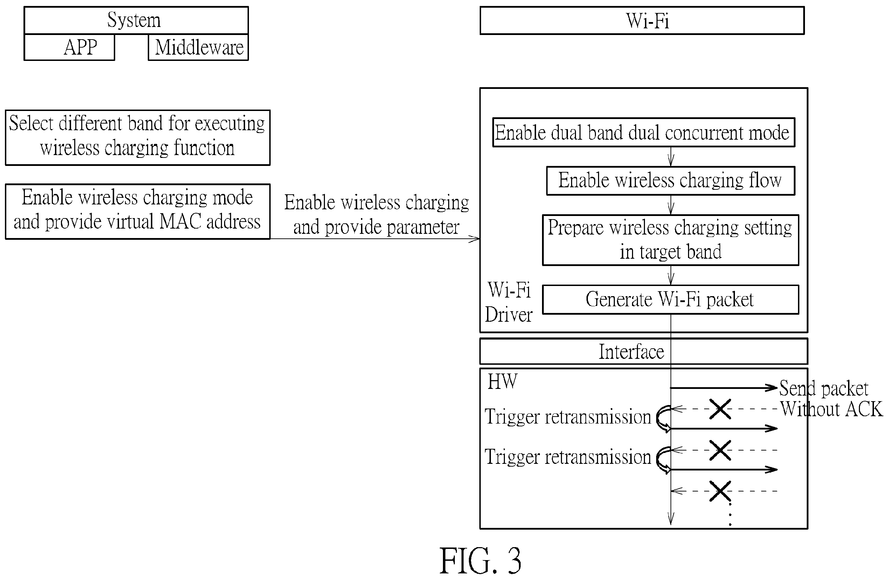

FIG. 3 is a diagram illustrating a packet transmission method for wireless charging according to a second embodiment of the present invention. Referring to FIG. 1 and FIG. 3 together, initially the electronic device 100 has been communicated with the electronic device 190 by using a channel within a first band such as 5GHz band, and an application and a middle of a system side selects a second band such as 2.4GHz for wireless charging function. In addition, the system enables the wireless charging mode and provides a virtual MAC address. Then, the processor 110 executes the Wi-Fi driver 124 to enable a dual band dual concurrent mode, so that the first band and the second band can be used to transmit packets simultaneously. It is noted that the dual band dual concurrent mode is known by a person skilled in the art, so further descriptions are omitted here. In addition, the processor 110 further enables a wireless charging flow, prepares wireless charging setting and generates a Wi-Fi packet. In this embodiment, a header of the Wi-Fi packet comprises the virtual MAC address, and the Wi-Fi packet has a payload with large size or a maximum size. Then, the processor 110 transmits the Wi-Fi packet to the wireless communication module 130 via USB interface, SDIO interface or PCIe interface. After obtaining the Wi-Fi packet, the wireless communication module 130 starts to transmit the Wi-Fi packet, and the contents of the Wi-Fi packet are temporarily stored in a buffer within the wireless communication module 130. Then, because the Wi-Fi packet comprises the virtual MAC address instead of the physical MAC address, no electronic device will send an ACK back to the electronic device 100. If no ACK is received for a period of time, the wireless communication module 130 triggers a retransmission mechanism to retransmit the Wi-Fi packet.

In light of above, because the wireless communication module 130 always sends the Wi-Fi packet with virtual MAC address, the wireless communication module 130 will not receive any ACK in response to the Wi-Fi packet, so the Wi-Fi packet is continuously retransmitted, and the RF energy harvesting charge circuit 182 can generate higher energy to charge the battery 184 efficiently due to the high-density Wi-Fi packets in the air. In addition, because of the dual band dual concurrent mode, the high-density Wi-Fi packet transmission will not affect the communications between the electronic devices 100 and 190.

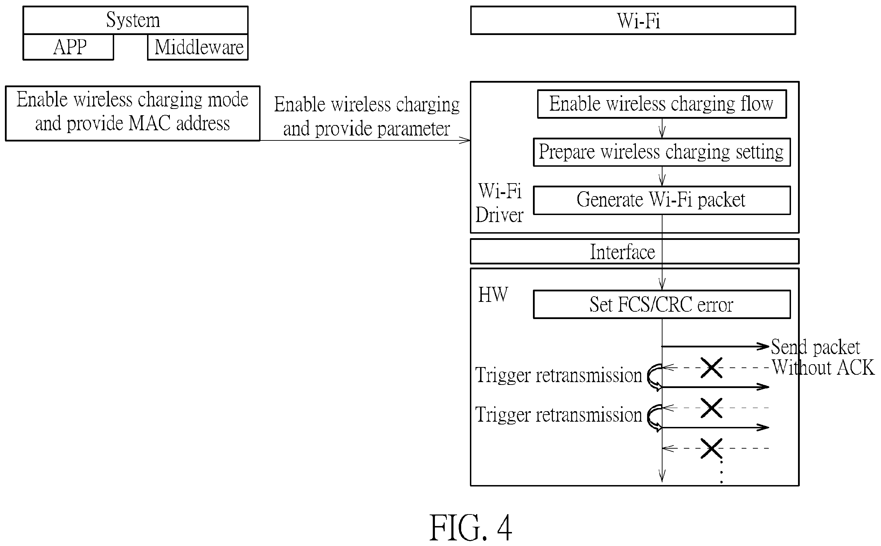

FIG. 4 is a diagram illustrating a packet transmission method for wireless charging according to a third embodiment of the present invention. Referring to FIG. 1 and FIG. 4 together, initially an application and a middle of a system side enables the wireless charging mode and provides a MAC address. Then, the processor 110 executes the Wi-Fi driver 124 to enable a wireless charging flow, prepare wireless charging setting and generate a Wi-Fi packet. In this embodiment, a header of the Wi-Fi packet comprises the MAC address, and the Wi-Fi packet has a payload with large size or a maximum size. Then, the processor 110 transmits the Wi-Fi packet to the wireless communication module 130 via USB interface, SDIO interface or PCIe interface. After obtaining the Wi-Fi packet, the wireless communication module 130 intentionally generates a wrong frame check sequence (FCS) or a wrong Cyclic redundancy check (CRC) according to the Wi-Fi packet, and the wireless communication module 130 writes the wrong FCS or wrong CRC into the Wi-Fi packet. It is noted that the above-mentioned FCS and CRC are for illustrative, in other embodiments, the FCS/CRC can be replaced by any other suitable error detection code that is used to determine if the packet is correct. Then, the wireless communication module 130 starts to transmit the Wi-Fi packet with wrong FCS/CRC, and the contents of the Wi-Fi packet are temporarily stored in a buffer within the wireless communication module 130. Then, because the Wi-Fi packet comprises wrong FCS/CRC, the other electronic device such as 180 will determine that the received Wi-Fi packet has an error, so no electronic device will send an ACK back to the electronic device 100 in response to the Wi-Fi packet. If no ACK is received for a period of time, the wireless communication module 130 triggers a retransmission mechanism to retransmit the Wi-Fi packet.

In light of above, because the wireless communication module 130 always sends the Wi-Fi packet with wrong FCS/CRC, the wireless communication module 130 will not receive any ACK in response to the Wi-Fi packet, so the Wi-Fi packet is continuously retransmitted, and the RF energy harvesting charge circuit 182 can generate higher energy to charge the battery 184 efficiently due to the high-density Wi-Fi packets in the air.

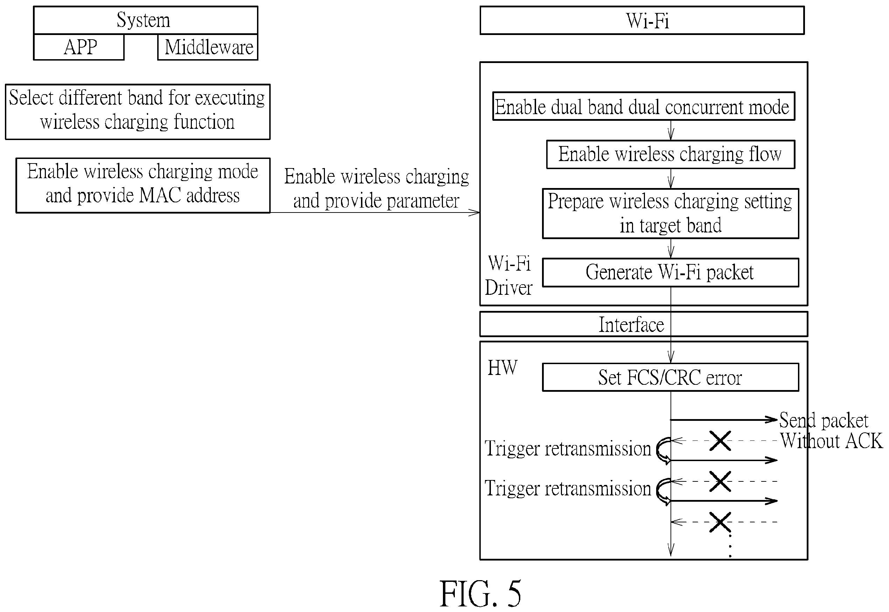

FIG. 5 is a diagram illustrating a packet transmission method for wireless charging according to a fourth embodiment of the present invention. Referring to FIG. 1 and FIG. 5 together, initially the electronic device 100 has been communicated with the electronic device 190 by using a channel within first band such as 5GHz band, and an application and a middle of a system side selects a second band such as 2.4GHz for wireless charging function. In addition, the system enables the wireless charging mode and provides a MAC address. Then, the processor 110 executes the Wi-Fi driver 124 to enable a dual band dual concurrent mode, so that the first band and the second band can be used to transmit packets simultaneously. In addition, the processor 110 further enables a wireless charging flow, prepare wireless charging setting and generate a Wi-Fi packet. In this embodiment, a header of the Wi-Fi packet comprises the MAC address, and the Wi-Fi packet has a payload with large size or a maximum size. Then, the processor 110 transmits the Wi-Fi packet to the wireless communication module 130 via USB interface, SDIO interface or PCIe interface. After obtaining the Wi-Fi packet, the wireless communication module 130 intentionally generates a wrong FCS or a wrong CRC according to the Wi-Fi packet, and the wireless communication module 130 writes the wrong FCS or wrong CRC into the Wi-Fi packet. Then, the wireless communication module 130 starts to transmit the Wi-Fi packet with MAC address and wrong FCS/CRC, and the contents of the Wi-Fi packet are temporarily stored in a buffer within the wireless communication module 130. Then, because the Wi-Fi packet comprises MAC address and wrong FCS/CRC, no electronic device will send an ACK back to the electronic device 100 in response to the Wi-Fi packet. If no ACK is received for a period of time, the wireless communication module 130 triggers a retransmission mechanism to retransmit the Wi-Fi packet.

In light of above, because the wireless communication module 130 always sends the Wi-Fi packet with MAC address and wrong FCS/CRC, the wireless communication module 130 will not receive any ACK in response to the Wi-Fi packet, so the Wi-Fi packet is continuously retransmitted, and the RF energy harvesting charge circuit 182 can generate higher energy to charge the battery 184 efficiently due to the high-density Wi-Fi packets in the air.

Briefly summarized, in communication system of the present invention, by controlling an electronic device to send a packet including content that is not recognized by other electronic devices to issue an acknowledgement, such that the packet comprises a virtual MAC address or a wrong error detection code, a retransmission mechanism can be triggered and the packet can be continuously retransmitted so that the other electronic device can generate higher energy to charge its battery. Therefore, the other electronic device can have better wireless charging efficiency.

## Claims

1. A control method of an electronic device (100), comprising:
enabling a wireless charging mode;
generating a packet, wherein the packet comprises content that is not recognized by other electronic devices (180, 190) to issue an acknowledgement; and
wirelessly transmitting the packet, and continuously retransmitting the packet.

2. The control method of claim 1, wherein the step of the generating the packet comprises:
generating the packet having a virtual media access control (MAC) address.

3. The control method of claim 1, wherein the step of generating the packet comprises:
generating the packet having a wrong error-detection code.

4. The control method of claim 1, wherein the step of wirelessly transmitting the packet comprises:
using a first frequency band to transmit the packet;
and the control method further comprises
wirelessly communicating another electronic device by using a second frequency band different from the first frequency band.

5. The control method of claim 4, wherein the packet is a Wi-Fi packet, the first frequency band is a 2.4 GHz band, and the second frequency band is a 5GHz frequency band.

6. The control method of claim 1, 2, 3, 4 or 5, further comprising:
after receiving battery information indicating that a battery of another electronic device has been charged with enough energy, disabling the wireless charging mode or decreasing a retransmission density of the packet.

7. The control method of claim 1, 2, 3, 4, 5 or 6, further comprising:
detecting whether the packet retransmission stops or no packet is transmitted to generate a detection result;
in response to the detection result indicating that the packet retransmission stops or no packet is transmitted, generating another packet, and wirelessly transmitting the another packet, and continuously retransmitting the another packet.

8. A circuitry within an electronic device (100), configured to perform the steps of
enabling a wireless charging mode;
generating a packet, wherein the packet comprises content that is not recognized by other electronic devices to issue an acknowledgement; and
wirelessly transmitting the packet, and continuously retransmitting the packet.

9. The circuitry of claim 8, wherein the step of the generating the packet comprises:
generating the packet having a virtual media access control (MAC) address or generating the packet having a wrong error-detection code.

10. An electronic device (100), comprising:
a processor (110), configured to enable a wireless charging mode and generate a packet; and
a wireless communication module (130), configured to wirelessly transmit the packet, and continuously retransmit the packet;
wherein the packet comprises content that is not recognized by other electronic devices (180, 190) to issue an acknowledgement.

11. The electronic device (100) of claim 10, wherein the processor generates the packet having a virtual media access control (MAC) address.

12. The electronic device (100) of claim 10, wherein the wireless communication module (130) generates a wrong error-detection code, and writes the wrong error-detection code into the packet.

13. The electronic device (100) of claim 10, 11 or 12, wherein after wirelessly transmitting the packet, if no acknowledgement in response to the packet is received, using a hardware circuit within the wireless communication module to trigger a retransmission mechanism to retransmit the packet.

14. The electronic device (100) of claim 10, 11, 12 or 13, wherein after receiving battery information indicating that a battery of another electronic device has been charged with enough energy, the processor (110) disables the wireless charging mode or decreasing a retransmission density of the packet.

15. The electronic device (100) of claim 10, 11, 12, 13 or 14, wherein the processor (110) detects whether the packet retransmission stops or no packet is transmitted to generate a detection result; and in response to the detection result indicating that the packet retransmission stops or no packet is transmitted, the processor (110) generates another packet, and wirelessly transmits the another packet, and continuously retransmitting the another packet.
